# EUROPEAN PATENT SPECIFICATION

(11) **EP 1 631 103 B1**
(45) Date of publication and mention of the grant of the patent: **19.03.2008**
(21) Application number: 04020474.5
(22) Date of filing: 28.08.2004
(51) Int. Cl.: H04Q 7/38, G06F 17/30, H04L 29/12

(54) **Method of establishing a location dependent group call**
Verfahren zum Aufbau eines positionsabhängigen Gruppengesprächs
Procédé pour établir un appel de groupe en fonction de la position

(43) Date of publication of application: 01.03.2006
(73) Proprietor: Alcatel Lucent, 75008 Paris (FR)
(72) Inventor: Lösch, Kurt, Dr., 70191 Stuttgart (DE)
(74) Representative: Schmidt, Werner Karl

(56) References cited:
- US-A1- 2003 096 621
- US-B1- 6 240 069
- JEN-YI PAN ET AL: "Context-aware service protocol an extensible and configurable framework for user context awareness services in pervasive computing systems" IEEE 2003, vol. 3, 16 March 2003 (2003-03-16), pages 2058-2063, XP010640085

## Description

The invention relates to a method of establishing a communication connection between terminals as well as a server for supporting the establishment of such connections.

Today, cellular radio networks are widely used by private and business users. Such networks typically provide a full duplex point to point voice communication service.

On the other hand, Private Land Mobile Radio Services (= PLMRS) are used by user groups such as business and public organizations for wide range of operations. For example, such services are used for activity coordination in the field of building maintenance, security or medical services. Further, such kind of radio service is used for intercommunication between drivers of cars and trucks which are interested in communicating with neighboring drivers to exchange, for example, traffic data. All users of a common group in a PLMR as system share the same frequency channel. The service provides a simplex, not a duplex voice communication service between users of the group. The same frequency channel is used for both directions of conversation, with a push-to-talk button being used to activate the transmitter when a user wishes to call another user or to respond within a conversation. These services provide a "push-to-talk" radio service wherein a group of users are linked via a shared communication medium and the right to talk is allocated by a "push-to-talk" button.

To enable a communication to neighboring cars it was further proposed to establish ad-hoc communication networks based on a direct car-to-car communication. But, ad-hoc networks would require new additional' hardware for car-to-car communication. This approach would only work if a certain fraction of cars are equipped and active. About 30 % of the cars would be needed. Therefore, there would be a very long lead time for introduction of this service. In addition distributed routing algorithms are not yet fully elaborated.

Further, information-centric routing protocols are proposed to increase the efficiency of cellular radio networks. For example, WO 03/063540 A1 describes a method wherein a mobile phone receives communication addresses of a second mobile phone and routes those communications to the second mobile phone via a third mobile phone. Network addresses are auto-configured and the information-centric routing protocol is derived based at least in part on variables including the network addresses. A communication is routed to a mobile device via another mobile device and in accordance with the information-centric routing protocol.

Further, WO 02/25973 A1 proposes to display an identifier in or adjacent to a parking bay. The identifier being unique to said parking bay or to a group of parking bays. Users of the parking bay use the identifier as an address to contact a remote service operator from a mobile wireless device. The remote service operator establishes the identity of the user of the mobile wireless device and charges the user for an appropriate sum.

US 6,240,069 B1 describes the establishment of a group call to at least one mobile terminal located within a specified area within a cellular network. A calling party places a call to a group of subscribers by dialing a number associated with the group. In addition, the calling party also enters a desired location. A service node then sends a positioning request for each MS of the group (MS = Mobile Station). The positioning data may be delivered, e.g., via a triangulation algorithm based on TA and OTD, respectively, or by means of GPS (TA = Timing Advance; OTD = Observed Time Difference; GPS = Global Positioning System). The location of each of the MSs within the group can then be compared with the requested location. The service node can then define the location-based group from the original group of subscribers and set up a group call to those subscribers within the area associated with the specified location.

US 2003/0096621 A1 describes a method where a movement of a plurality of mobile users across a wireless network is tracked and a group of mobile users engaged in a common location-based activity from the plurality of mobile users based on the tracked movement is identified. The tracked movement can be used to derive information such as to determine a group property associated with the identified group of mobile users. For example, the tracking of a group of subscribers identified to travel on the same road shows that the subscribers travel in their vehicles at a slower speed than usual for this road (group property). The information derived from that tracking would be that there must be a traffic jam or congestion on the road. This information may be provided to other mobile users.

It is the object of the present invention to improve inter-communication between moving objects like vehicles and passengers in the vehicles.

The object of the present invention is achieved by a method of establishing a communication connection between terminals according to claim 1. The object of the present invention is further achieved by a server for supporting the establishment of communication connection between terminals according to claim 8.

The invention proposes to create a new address space in addition to the conventional phone numbers. The "road addresses" reflect the position of subscribers who join the user group relative to the road network.

The road network can be composed of any kind of traffic routes, e.g. contains highway networks, road networks, water ways and railway systems of one or more countries. Preferably, terminals are mobile terminals associated with subscribers of the user group, for example cellular phones, PDAs (PDA = Personal Digital Assistant), Laptops or embedded communication systems in vehicles. According to further embodiments of the invention, a terminal is constituted by road side equipment equipped with the necessary communication capabilities.

Various advantages are achieved by the invention. No further hardware resources are needed for providing enhanced car-to-car communications. The invention constitutes a platform for new value-added services around telematics. Therefore, the lead time for introducing value-added services around telematic is very short. Further, the new addressing scheme is canonically and simple to implement.

The new addressing scheme is very convenient for the user. When driving on a highway, the user is in a position to simply establish communication to neighboring cars or passing cars on the opposite lane or cars further down the road, which could be of great interest, for example, when exchanging information on traffic jams, road condition, weather, etc.

Further advantages are achieved by the embodiments of the invention indicated by the dependent claims.

According to a preferred embodiment of the invention, the control unit assigns road addresses comprising variables reflecting course information in form of highway identification and navigational information. The address reflects the highway used by the subscriber as well as the current kilometer/meter value on the highway for such subscribers.

Preferably, the assigned road addresses comprise a road identifier, a direction of travel identifier and a road sector identifier. For example, an address format E 50S.254.200.xxx is used to establish the address space, wherein E50 represents the highway number, S represents the direction of travel (S = Southbound), 254.200 represents the road sector, i.e. 254 the kilometer and 200 the meters (rounded to full hundreds) and xxx is used for distinction of various cars within the one hundred meter range.

Such addressing scheme simplifies the routing process and is well adapted to support a wide range of new value added services around telematics.

Preferably, the call request specifies one or more variables of road addresses to identify one or more called subscribers. For example, a subscriber asks the operator for a connection to somebody on the same highway, i.e. 20 km ahead or type in the request, e.g. E50S.274.

Further, the call request may specify one or more called subscribers relative to the road address of the called subscriber, i.e. the subscriber has not to know his position relative to the road network. For example, the subscriber simply specifies to have a communication connection to one or more subscribers of a "highway user group" which are, for example, 20 km ahead, which drive neighboring cars or which drive passing cars on the opposite lane.

To provide such kind of service, the server has to perform a simple comparison of road addresses of subscribers of the user group, i.e. such call requests can be processed in a simple and efficient way.

The subscriber data base holds additional information of subscribers of a user group which can be used as further identifier to defer the subscriber from other subscribers of the user group. For example, the subscriber data base holds information of the type of car, the color of the car or the licensing plate of the car which is associated with a subscriber of a user group. Such additional information can be used in a call request to give further details of the called users or user groups and thereby enhances the capabilities of the service.

Instead of typing information transferred through the call request to the server, a voice recognition system can be used to enabling voice inputs for the creation of the call request. Instant messaging type responses could indicated how many cars are in the requested zone. Preferably, the call request reflects the outcome of a preliminary dialog between the subscriber and the call control unit of the server.

According to a preferred embodiment of the invention, the call request is a push-to-talk call request and the server establishes an IP-based push-to-talk communication connection with the one or more called subscribers. Preferably, the above-described address scheme is used instead of phone numbers or names to identify the target of the push-to-talk half-duplex communication.

Preferably, a localization server of the communication network is used to determine the geographical positions of subscribers of the user group. Information about the physical location, i.e. correlates of altitude and longitude of the terminals and thereby subsequently of the cars which are already pre-evaluated and provided by mobile networks for location based services. Therefore, it is not necessary to equip mobile phones with specific localization hardware which further reduces the lead time for introduction of the service.

Alternatively, terminals repeatedly determine the geographical positions of the subscribers of the user group via a global positioning system, e.g. GPS or Galileo. The server subsequently polls these position data for dynamically assigning of the road addresses. If the car is equipped with a GPS receiver, more accurate data on the position could be sent to the network. By comparing the physical location with the coordinates of the highway, the server could easily find out which car drives on what highway. Travel direction and average speed could be extracted from the position difference of subsequent polling with a time difference appropriate for the location resolution.

These as well as other features and advantages of the invention will be better appreciated by reading the following detailed description of presently preferred exemplary embodiments taken in conjunction with the accompanying drawings of which:
- Fig. 1: is a block diagram showing a wireless communication system with a server for supporting the establishment of communication connections according to the present invention.
- Fig. 2: is a functional view of a communication environment with interacting users of a highway user group.

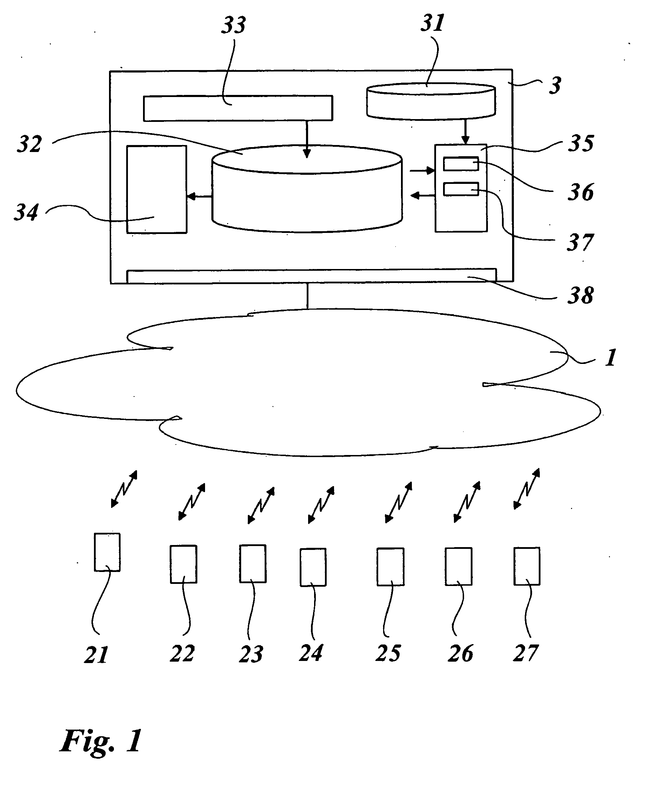

Fig. 1 shows wireless communication network 1, a server 3 and a plurality of mobile terminals 21 to 27.

The wireless communication network 1 is a communication system which provides a wireless communication service, preferably a cellular radio network such as a GSM or UMTS network (GSM = Global System For Mobile Communication; UMTS = Universal Mobile Telecommunications System). Preferably, the communication network 1 supports the transfer of packet information via "always on connections". For example, the wireless communication network 1 is a GSM network supporting a GPRS service (GPRS = General Packet Radio Service) which makes it possible for the wireless terminals 21 to 27 to exchange in addition to "normal voice" traffic packet switched data traffic via the radio interface. Other kinds of wireless communication networks supporting an IP based packet switching service are, for example, UMTS, EDGE or 4G networks.

The terminals 21 to 27 are cellular phones or any other terminal capable to communicate via the communication network 1.

The server 3 is composed of one or several interlinked computers, a software platform and various application programs executed based on the system platform provided by the aforementioned software and hardware platform. The functionalities of the server 3 are provided by the execution of these application programs. From functional point of view, the server 3 comprises an interface unit 38, data bases 31 and 32 and control units 33, 34 and 35.

The interface unit 38 connects the server 3 with the communication network 1.

According to a preferred embodiment of the invention, the server 3 provides an IP-based push-to-talk service to enrolled subscribers and the interface 38 supports an IP-based communication between the mobile terminals 21 to 27 and the server 3.

In such case, the wireless terminals 21 to 27 are cellular phones which are equipped with additional functionalities to support - beside the normal "cellular phone service" - a push-to-talk service similar to the aforementioned Private Land Mobile Radio Service. Each of the wireless terminals 21 to 27 is composed of an electronic circuit having a radio part and at least one microprocessor, application programs executed by the at least one microprocessor, and input and output means, for example a microphone, a loudspeaker, a keypad and a display. The functionalities of the wireless terminals 31 to 34 are performed by the interaction of these hardware and software components. From functional point of view, each of the mobile terminals 21 to 27 has a radio communication unit representing the "normal" radio communication capabilities of a cellular phone, a packet radio service unit representing the functionalities of the wireless terminal which support exchange of packet switched data through the wireless communication network 1 and a push-to-talk client that handles the client part of the service application.

But, it is also possible that the server 3 exchanges data with the terminals 21 to 27 solely via circuit switched connections using "normal" telephone communication services.

The data base 32 comprises data which assign road addresses to enrolled subscribers of a highway user group. A road address is composed of a set of variables assigned to the respective subscriber. This set of variables comprises a highway identifier specifying a highway, for example, by the highway number, a direction of travel identifier and a highway sector identifier specifying the sector of the highway which is currently joined by the subscriber. The highway is split into a set of sectors, wherein each sector has a predefined size, for example between one hundred meters and one kilometer. Further, the road address comprises an identifier for subscribers within the same highway sector, for example a three digit number.

Additionally, the data base 32 stores a set of subscriber data for each registered user of the highway user group. The subscriber data contains one or more network addresses of the subscriber, for example the phone number of a mobile terminal associated with the subscriber as well as a corresponding IP and/or SIP address (IP = Internet Protocol, SIP = Session Initiation Protocol). Further, the subscriber data set comprises additional data specifying the subscriber and/or the car of the subscriber. These data may specify user and/or talk groups joined by the subscriber, as well as, for example, the name, the age and preferences of the subscriber. Car specific data are, for example, type of car, color of car or licensing number of car.

Additionally, the road address optionally comprise variables as the average or actual speed the subscriber is travelling or any other kind of navigational information.

The control unit 33 provides an administration interface to the data base 32 and makes it possible to enrolled subscribers of the highway user group to amend data of the subscriber data set or to add further data, for example preferences, to his subscriber data set.

The data base 31 holds data of the road network, for example a detailed digital road map of one or more countries. Optionally, the data of the road network contains data about railway systems and water ways of these one or more countries.

The control unit 35 receives geographical position data of subscribers of the highway user group and manages the dynamical assignment of road addresses to the subscribers of the highway user group.

It contains one or more processes 37 which control the repeated determination of geographical positions of the subscribers of the highway user group and the transfer of these position data to the control unit 35.

According to a first embodiment of the invention, the communication network 1 has a mobility service which determines the positions of the mobile terminals 21 to 27 by comparing the radio frequency signals exchanged between these mobile terminals and the surrounding base stations. By comparison of these signals it interpolates the current geographical position of the user and delivers, for example, coordinates of altitude and longitude of the mobile terminals 21 to 27 to the control unit 35. The process 37 scans the data base 32 for subscribers of the highway user group and periodically polls the mobility service of the communication network 1 to determine and submit the actual geographical positions of the mobile terminals associated with these users to the control unit 35.

According to a further embodiment of the invention, the mobile terminals 21 to 27 are equipped with a GPS receiver (GPS = Global Positioning System) or a Galileo receiver which are used by the mobile terminals to calculate more accurate data on the position of the respective mobile terminal. Further, it is possible that the mobile terminals are connected with an external GPS receiver or with a car navigation system that submits physical location data to the mobile terminal.

In such an environment, the process 37 periodically polls a client hosted by the mobile terminal 21 to 27, respectively. When receiving such inquiry from the process 37, the respective mobile terminal determines its geographical position or contacts the connected car navigation system for such data. Then, it transmits the actual geographical position via the communication network 1 to the control unit 35. Preferably, the control unit 35 and the mobile terminals 31 to 27 exchange these data via a packet switched communication service of the communication network, for example via a "always on" IP-based interface of the mobile terminals 21 to 27.

According to a further embodiment of the invention, the geographical position of a part of the mobile terminals 21 to 27 is determined by hand of a mobility service of the communication network 1 and the geographical position of another part of the mobile terminals 21 to 27 is determined by means of a global positioning system. In such case, the preference data of the subscribers of the highway user group comprises a corresponding flag indicating whether the control unit 35 has to contact a mobility server (optionally addressing a specific mobility server) or has to contact a client executed on the respective mobile terminal for providing this information. Optionally, the control unit 35 downloads the necessary client software to a mobile terminal as soon as recognizing that an enrolled subscriber of the highway user group prefers that kind of determination of the geographical position data. But, it is also possible that a push-to-talk client hosted on the mobile terminals 21 to 27 comprises the necessary functionalities to submit geographical position data to the control unit 35.

Alternatively, the process 37 initiates an periodic determination and transfer of geographical position data by means of a global positioning system or a mobility service and collects these data without a polling process.

A process 36 of the control unit 35 correlates the geographical positions received through the process 37 with road network data stored in the data base 31. It compares the received coordinates of altitude an longitude with the coordinates of the road network and thereby localizes the highway as well as the highway sector used by the subscriber. Further, it extracts travel direction and average speed from the position differences of subsequent polling. These information about actual traffic flow could be automatically generated without any road side equipment.

Having determined all the current course and navigational information about a subscriber, the control unit 35 checks whether the assignment of road addresses to subscriber is still correct. If the assignment is incorrect it creates a new road address based on the determined information and assigns this road address to the respective subscriber.

The control unit 34 is a call control unit which receives call requests and routes calls to one or more mobile terminals of subscribers of the highway user group based on the received call requests and the assignment of road addresses to subscribers stored in the data base 32.

For example, the control unit 34 receives a push-to-talk call request from the mobile terminal 21. The user of the mobile terminal 21 selects a person or a group of persons from a list of available persons and group of persons displayed at the display of the wireless terminal 21. Preferably, the push-to-talk client of the mobile terminal 31 sends a message to the call control unit 34 requesting the submission of information about available users or user groups to the mobile terminal 21. For example, the message specifies to get information about all subscribers of the highway user group travelling at the same highway, travelling at the same highway sector, travelling in the same direction and/or are further down the road. When receiving such message, the control unit 34 sends a corresponding query to the data base 32 and selects - by means of the road address of the calling subscriber, i.e. the subscriber of the mobile terminal 21, the road addresses that fulfill these conditions. Then, it transfers the determined road addresses to the push-to-talk-client executed by the mobile terminal 21 which displays these road addresses to the user.

Further it is possible that the push-to-talk client controls the display of predefined talk groups to the user, for example, a first talk group including the subscriber of the highway user group travelling on the same highway, a second talk group including the subscribers of the highway user group travelling within the same highway sector and in the same direction, a third talk group including the subscribers of the highway user group travelling on the same highway in the opposite direction five kilometers ahead the subscriber etc.

Such kind of service might be used by priority vehicles, for example police cars or ambulances, to inform vehicles travelling on the route of the priority vehicle to free a corridor for the priority vehicle. For example, a specific talk group includes all the subscribers of the highway user group travelling on the same highway, in the same direction and within the next twenty highway sectors relative to the priority vehicle. The driver of the priority vehicle or a central operator contacts the members of the specific talk group through the server 3 and thereby informs the drivers within the next twenty highway sectors about the position of the priority vehicle.

Further it is possible that the classification of talk groups is not held by the control unit 34 but is part of a personal phone book of the user held by the wireless terminal 21.

When the push-to-talk client of the mobile terminal 21 detects the selection of a user (selection of one or more road addresses) or the selection of a talk group it signals a corresponding call request to the control unit 34 of the server 3. This call request already specifies one or more road addresses, a talk group or one or more variables of the road address scheme. Further, it is also possible that the call request contains information indirectly specifying a road address or a set of road addresses. Further, the call request specifies additional information that has to be used for the selection of the call subscribers, for example car data (color of car, type of car, etc.) and/or a correlation of car data and/or user preferences.

When receiving the call request from the mobile terminal 21, the control unit 43 accesses the data base 32 and determines the road address or the road addresses of the subscribers specified in the call request. Dependent on the information included in the call request, it accesses the user data set of the calling or called subscribers and performs additional calculations. Then, the control unit 34 uses the assignment encoded in the data base 32 to perform a mapping between road addresses and corresponding communication addresses, e.g. phone numbers or IP addresses.

In case of a push-to-talk call request, it establishes in the following an IP based one-to-one or one-to-many simplex streaming communication channel between the calling mobile terminal 21 and the one or more called mobile terminals. In the following, audio-streams are transferred via this communication channel by means of the SIP and RTP protocol (RTP = Real Time Protocol).

Furthermore, it is possible that the control unit 34 provides a routing service based on a classical technology. For example, the control unit 34 bases on an IN architecture (IN = Intelligent Network) and is contacted by calling a specific phone number. In the following, the call request is specified by typing or via voice recognition and a "normal" telephone connection is established between the calling mobile terminal 21 and the one or more subscribers specified in the call request.

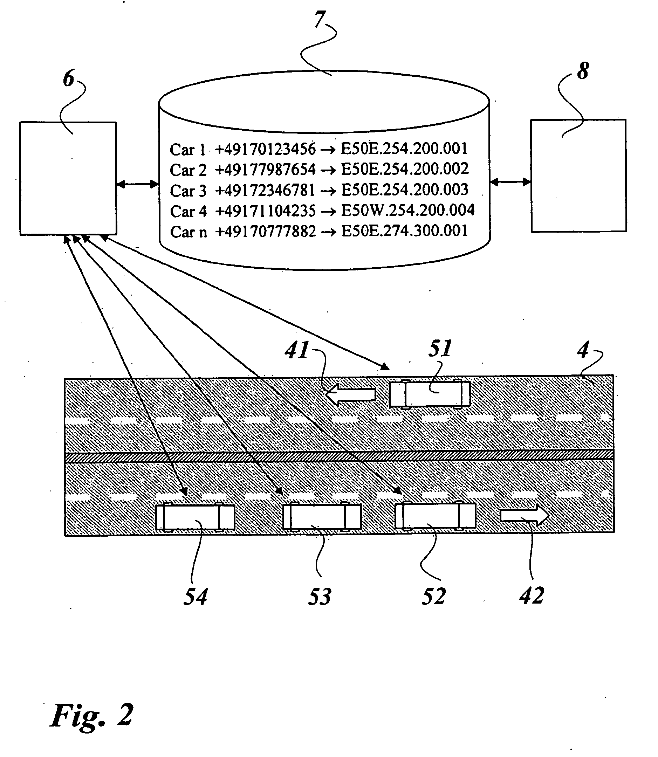

Fig. 2 shows a scenario with base stations 6 and 8, a data base 7 and a section of a highway network with a car 51 moving in a direction 41 and cars 52 to 54 moving in a direction 42.

The data base 7 holds road addresses of subscribers of a user group and assigns these addresses to telephone numbers of mobile terminals associated with these subscribers.

For example, the road used by the cars 51 to 54 has the indication "E50". The travelling direction 41 has the indication "W" (= Westbound) and the travelling direction 42 has the indication "E" (=Eastbound). All the cars 51 to 54 are currently located in the same road sector which has the indication "254.200".

The last sequence of the road address is an unique identifier of the subscribers located within the sector "254.200....".

The data base 7 assigns to the subscriber of the car 51 the road address "E50W.254.200.004" to the subscriber of the car 54 the road address "E50E.254.200.001" to the subscriber of the car 53 the road address "E50E254.200.002" and to the subscriber of the car 52 the road address "E50E.254.200.003".

When the base station 6 receives a call request specifying, e.g. a call to a subscriber at a road having the indication "E50" and traveling in the road sector "254.200", the mobile exchange 6 maps this call request by means of the data base 7 to the mobile phone numbers of the subscribers of the car 51 to 54 and establishes the corresponding communication connections.

## Claims

1. A method of establishing a communication connection between terminals (21 to 27), the method comprising the steps of:
receiving a call request; and
determining geographical positions of subscribers of a user group;
**characterized in**
**that** the method comprises the further steps of:
correlating said geographical positions with road network data (31) and dynamically assigning road addresses to said subscribers, the road addresses reflecting the position of subscribers relative to the road network and containing a road identifier, a direction of travel identifier, a road sector identifier, and an identifier for distinction of subscribers within the same road sector, whereby subscriber data of the subscribers of the user group are held, the subscriber data of each subscriber containing one or more network addresses of the subscriber and additional information of the subscriber which is used in the call request to select the subscriber; and
routing the call to one or more mobile terminals (21 to 27) of subscribers of the user group based on said call request and said assignment of road addresses.

2. The method of claim 1,
**characterized in**
**that** the call request specifies one or more variables of the road addresses.

3. The method of claim 1,
**characterized in**
**that** the call request specifies one or more called subscribers dependent on the road address of the calling subscriber.

4. The method of claim 1,
**characterized in**
**that** the call request specifies further information of a car (51 to 54) associated with a called subscriber.

5. The method of claim 1,
**characterized in**
**that** the method comprises the steps of: receiving a push to talk call request; and establishing an IP based push to talk communication connection with the one or more called subscribers.

6. The method of claim 1,
**characterized in**
**that** the method comprises the step of determining geographical positions of subscribers of the user group by means of accessing a localization service.

7. The method of claim 1,
**characterized in**
**that** the method comprises the steps of repeatedly determining geographic positions of subscribers of the highway user group via a global positioning system; and subsequently polling these positions for the assignment of road addresses and/or for determination of the average driving speed within a road sector.

8. A server (3, 6) for supporting the establishment of communication connections between terminals (21 to 27), :
**characterized in**
**that** the server comprises: a subscriber data base (32, 7) holding road addresses of subscribers of a user group, said road addresses containing a road identifier, a direction of travel identifier, a road sector identifier, and an identifier for distinction of subscribers within the same road sector, whereby subscriber data of the subscribers of the user group are held, the subscriber data of each subscriber containing one or more network addresses of the subscriber and additional information of the subscriber which is used in the call request to select the subscriber; a control unit (35) adapted to receive geographical positions of subscribers of the user group, to correlate said geographical positions with highway network data (31) and dynamically assign road addresses to said subscribers, the road addresses reflecting the position of subscribers relative to the road network and containing a road identifier, a direction of travel identifier, a road sector identifier, and an identifier for distinction of subscribers within the same road sector; and a call control unit (34) for receiving call requests and routing the call to one or more terminals (21 to 27) of subscribers of the highway user group based on said call request and said assignment of road addresses.

## Patentansprüche

1. Verfahren zum Aufbau einer Kommunikationsverbindung zwischen Endgeräten (21 bis 27), wobei das Verfahren folgende Schritte umfasst:
Empfangen einer Verbindungsanforderung; und
Bestimmen geografischer Positionen von Teilnehmern einer Benutzergruppe;
**dadurch gekennzeichnet, dass**
das Verfahren folgende weitere Schritte umfasst:
Korrelieren der geografischen Positionen mit Straßennetz-Daten (31) und dynamisches Zuweisen von Straßen-Adressen an die Teilnehmer, wobei die Straßen-Adressen die Position von Teilnehmern bezüglich des Straßennetzes widerspiegeln und eine Straßen-Kennung, eine Kennung der Bewegungsrichtung, eine Straßen-Sektor-Kennung und eine Kennung zur Unterscheidung von Teilnehmern im selben Straßen-Sektor enthalten, wobei Teilnehmer-Daten der Teilnehmer der Benutzergruppe bereitgehalten werden, wobei die Teilnehmer-Daten jedes Teilnehmers eine oder mehrere Netzwerkadressen des Teilnehmers und zusätzliche Informationen über den Teilnehmer enthalten, die in der Verbindungsanforderung benutzt werden, den Teilnehmer auszuwählen; und
Weiterleiten des Anrufs an ein oder mehrere mobile Endgeräte (21 bis 27) von Teilnehmern der Benutzergruppe auf der Grundlage der Verbindungsanforderung und der Zuweisung von Straßen-Adressen.

2. Verfahren aus Anspruch 1,
**dadurch gekennzeichnet, dass**
die Verbindungsanforderung ein oder mehrere Variable der Straßen-Adressen spezifiziert.

3. Verfahren aus Anspruch 1,
**dadurch gekennzeichnet, dass**
die Verbindungsanforderung abhängig von der Straßen-Adresse des Anrufers ein oder mehrere angerufene Teilnehmer spezifiziert.

4. Verfahren aus Anspruch 1,
**dadurch gekennzeichnet, dass**
die Verbindungsanforderung ferner Informationen über ein Auto (51 bis 54) spezifiziert, das einem angerufenen Teilnehmer zugeordnet ist.

5. Verfahren aus Anspruch 1,
**dadurch gekennzeichnet, dass**
das Verfahren folgende Schritte umfasst: Empfangen einer Sprech-Anforderung; und Aufbauen einer auf IP basierenden Sprechtasten-Kommunikations-Verbindung mit dem einen oder den mehreren angerufenen Teilnehmer(n).

6. Verfahren aus Anspruch 1,
**dadurch gekennzeichnet, dass**
das Verfahren den Schritt umfasst, geografische Positionen von Teilnehmern der Benutzergruppe durch Zugriff auf einen Positionsbestimmungs-Dienst zu bestimmen.

7. Verfahren aus Anspruch 1,
**dadurch gekennzeichnet, dass**
das Verfahren die Schritte umfasst, die geografischen Positionen von Teilnehmern der Straßen-Benutzergruppe wiederholt über ein globales Positionsbestimmungs-System zu bestimmen; und anschließend diese Positionen auf die Zuordnung von Straßen-Adressen und/oder die Bestimmung der mittleren Fahrgeschwindigkeit in einem Straßen-Sektor abzufragen.

8. Server (3, 6) zur Unterstützung des Aufbaus von Kommunikations-Verbindungen zwischen Endgeräten (21 bis 27),
**dadurch gekennzeichnet, dass**
der Server folgendes enthält: Eine Teilnehmer-Datenbank (32, 7), die Straßen-Adressen von Teilnehmern einer Benutzergruppe enthält, wobei die Straßen-Adressen eine Straßen-Kennung, eine Kennung der Bewegungsrichtung, eine Straßen-Sektor-Kennung und eine Kennung zur Unterscheidung von Teilnehmern im selben Straßen-Sektor enthalten, wobei Teilnehmer-Daten der Teilnehmer der Benutzergruppe bereitgehalten werden, wobei die Teilnehmer-Daten jedes Teilnehmers eine oder mehrere Netzwerkadressen des Teilnehmers und zusätzliche Informationen über den Teilnehmer enthalten, die in der Verbindungsanforderung benutzt werden, den Teilnehmer auszuwählen; eine Steuerungseinheit (35), die angepasst ist, geografische Positionen von Teilnehmern der Benutzergruppe zu empfangen, die geografischen Positionen mit Straßennetz-Daten (31) zu korrelieren und Straßen-Adressen den Teilnehmern dynamisch zuzuordnen, wobei die Straßen-Adressen die Position von Teilnehmern bezüglich des Straßennetzes widerspiegeln und eine Straßen-Kennung, eine Kennung der Bewegungsrichtung, eine Straßen-Sektor-Kennung und eine Kennung zur Unterscheidung von Teilnehmern im selben Straßen-Sektor enthalten; und eine Anruf-Steuerungs-Einheit (34) zum Empfang von Verbindungsanforderungen und zum Weiterleiten des Anrufs an ein oder mehrere Endgeräte (21 bis 27) von Teilnehmern der Straßen-Benutzergruppe auf der Grundlage der Verbindungsanforderung und der Zuweisung von Straßen-Adressen.

## Revendications

1. Procédé permettant d'établir une connexion de communication entre des terminaux (21 à 27), le procédé comprenant les étapes suivantes :
recevoir une demande d'appel; et
déterminer les positions géographiques des abonnés d'un groupe d'utilisateurs;
**caractérisé en ce que**
le procédé comprend les étapes supplémentaires suivantes :
mettre en corrélation lesdites positions géographiques avec les données de réseau routier (31) et affecter dynamiquement les adresses de route auxdits abonnés, les adresses de route reflétant la situation des abonnés par rapport au réseau routier et contenant un identificateur de route, une direction d'identificateur de trajet, un identificateur de secteur routier, et un identificateur destiné à la distinction des abonnés à l'intérieur du même secteur routier, les données d'abonné des abonnés du groupe d'utilisateurs étant conservées, les données d'abonné de chaque abonné du groupe d'utilisateurs contenant une ou plusieurs adresses de réseau de l'abonné et des informations supplémentaires de l'abonné qui sont utilisées dans la demande d'appel pour sélectionner l'abonné ; et
router l'appel vers un ou plusieurs terminaux mobiles (21 à 27) d'abonnés du groupe d'utilisateurs sur la base de la dite demande d'appel et de ladite affectation d'adresses de route.

2. Procédé selon la revendication 1,
**caractérisé en ce que**
la demande d'appel spécifie une ou plusieurs variables des adresses de route.

3. Procédé selon la revendication 1,
**caractérisé en ce que**
la demande d'appel spécifie un ou plusieurs abonnés appelés en fonction de l'adresse de route de l'abonné appelant.

4. Procédé selon la revendication 1,
**caractérisé en ce que**
la demande d'appel spécifie en outre les informations d'un véhicule (51 à 54) associé à un abonné appelé.

5. Procédé selon la revendication 1,
**caractérisé en ce que**
le procédé comprend les étapes suivantes : recevoir une demande d'appel de type push to talk ; et établir une connexion de communication de type push to talk basée sur IP avec un ou plusieurs abonnés appelés.

6. Procédé selon la revendication 1,
**caractérisé en ce que**
le procédé comprend l'étape de détermination des positions géographiques des abonnés du groupe d'utilisateurs au moyen de l'accès à un service de localisation.

7. Procédé selon la revendication 1,
**caractérisé en ce que**
le procédé comprend les étapes de détermination de manière répétée des positions géographiques des abonnés du groupe d'utilisateurs de l'autoroute via un système de positionnement mondial ; et par la suite d'interrogation de ces situations pour l'affectation d'adresses de route et/ou de détermination de la vitesse de conduite moyenne à l'intérieur d'un secteur routier.

8. Serveur (3, 6) destiné à supporter l'établissement des connexions de communication entre les terminaux (21 à 27),
**caractérisé en ce que**
le serveur comprend : une base de données d'abonnés (32, 7) conservant des adresses de route des abonnés d'un groupe d'utilisateurs, lesdites adresses de route contenant un identificateur de route, une direction d'identificateur de trajet, un identificateur de secteur routier, et un identificateur destiné à la distinction des abonnés à l'intérieur du même secteur routier, les données d'abonné des abonnés du groupe d'utilisateurs étant conservées, les données d'abonné de chaque abonné contenant une ou plusieurs adresses de réseau de l'abonné et des informations supplémentaires de l'abonné qui sont utilisées dans la demande d'appel pour sélectionner l'abonné ; une unité de contrôle (35) adaptée pour recevoir les positions géographiques des abonnés du groupe d'utilisateurs, pour mettre en corrélation lesdites positions géographiques avec les données de réseau autoroutier (31) et affecter dynamiquement des adresses de route auxdits abonnés, les adresses de route reflétant la position géographique des abonnés par rapport au réseau routier et contenant un identificateur de route, une direction d'identificateur de trajet, un identificateur de secteur routier, et un identificateur destiné à la distinction des abonnés à l'intérieur du même secteur routier ; et une unité de contrôle d'appels (34) destinée à recevoir les demandes d'appel et à router l'appel vers un ou plusieurs terminaux (21 à 27) d'abonnés du groupe d'utilisateurs de l'autoroute sur la base de ladite demande d'appel et de ladite affectation d'adresses de route.
